Europäisches Patentamt

European Patent Office

Office européen des brevets

(11) Publication number: **0 294 241**
A2

# (12) EUROPEAN PATENT APPLICATION

(21) Application number: 88305146.8

(22) Date of filing: 06.06.88

(51) Int. Cl.⁴: **G 11 B 7/013**
G 11 B 27/32
// G11B11/10, G11B13/04

(30) Priority: 05.06.87 JP 142089/87

(43) Date of publication of application:
07.12.88 Bulletin 88/49

(84) Designated Contracting States: DE FR GB NL

(71) Applicant: **SHARP KABUSHIKI KAISHA**
22-22 Nagaike-cho Abeno-ku
Osaka 545 (JP)

(72) Inventor: **Fujiwara, Tsuneo**
Akebono-ryo 2613-1 Ichinomoto-cho
Tenri-shi Nara-ken (JP)

Numata, Tomiyuki
Akebono-ryo 2613-1 Ichinomoto-cho
Tenri-shi Nara-ken (JP)

Fuji, Hiroshi
Akatsuki-ryo 2613-1 Ichinomoto-cho
Tenri-shi Nara-ken (JP)

Tsuji, Kentaroh
37-19-3, Hichijyou 1-chome
Nara-shi Nara-ken (JP)

Iwaki, Takeshi
2-10-106, Nijyou-cho 2-chome
Nara-shi Nara-ken (JP)

(74) Representative: **Brown, Kenneth Richard et al**
R.G.C. Jenkins & Co. 26 Caxton Street
London SW1H 0RJ (GB)

(54) Optical record/reproduction apparatus.

(57) An optical record/reproduction apparatus comprises an optical head throwing a main beam and sub-beams positioned on both sides thereof on a recording medium, a tracking control unit controlling the main beam to irradiate a data track from right above the same by means of a tracking servo using the sub-means, a record/reproduction unit for recording/reproducing data information along the data track using the main beam, and an ID information detection unit for detecting the ID information recorded in pits along the ID track using the sub-beam.

FIG.1.

**Description**

## OPTICAL RECORD/REPRODUCTION APPARATUS

BACKGROUND OF THE INVENTION

The present invention relates to an optical record/reproduction apparatus, such as a magneto-optical disk apparatus, for recording information in a recording medium using an optical means.

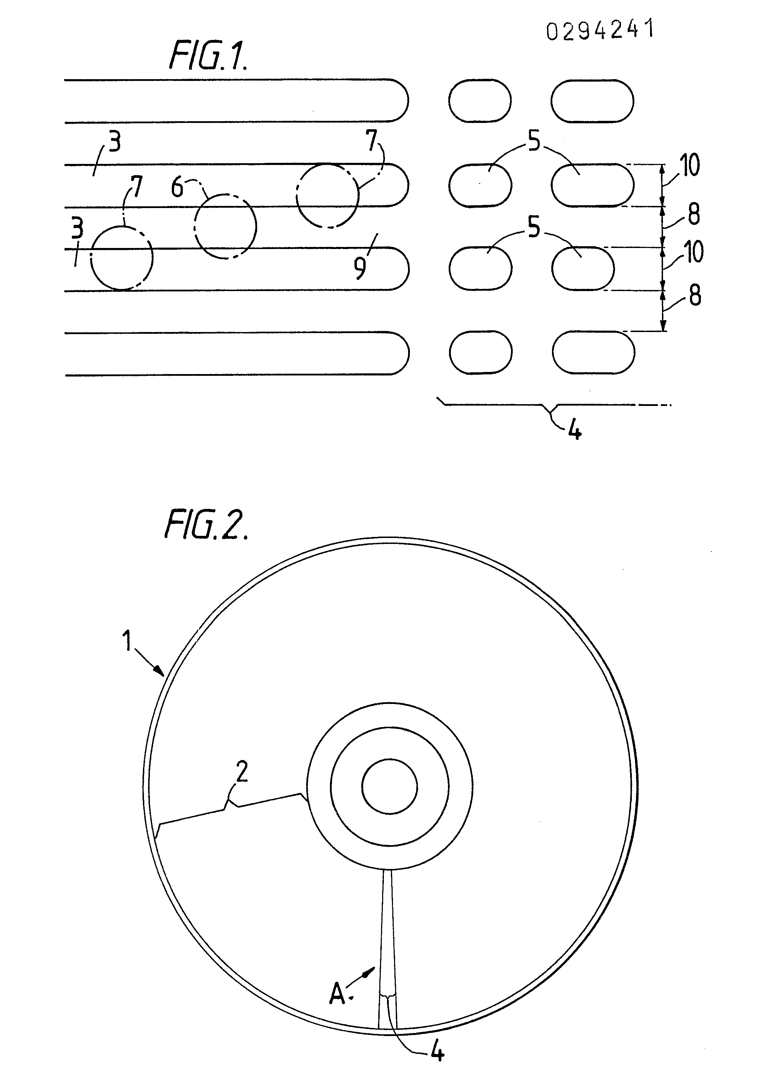

The magneto-optical disk apparatus uses a magneto-optical disk 1 as shown in FIG. 2 for its recording medium. Recording of information in the magneto-optical disk 1 is performed by throwing a light beam on a vertically magnetized film within a recording surface 2 with the film subjected to a magnetic field applied from outside. Therefore, the information is turned into a magnetic record in the vertically magnetized film. Reproduction of the information is performed by throwing a light beam on the vertically magnetized film and thereby detecting the angle of rotation of plane of polarization of the reflected beam. The information recorded and reproduced on the optical record/reproduction apparatus in the described manner will hereinafter be called data information.

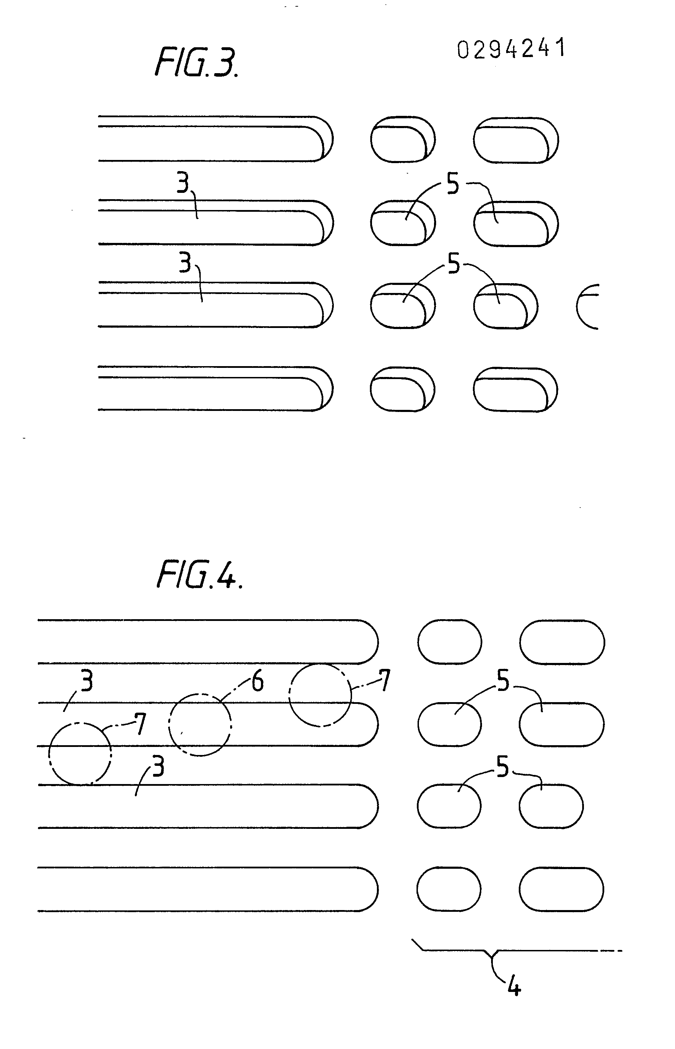

On the surface where the vertically magnetized film is formed within the recording surface 2 of the magneto-optical disk 1, there are made in advance a number of ditch type grooves 3 arranged in concentric circles as shown in FIG. 3 for a tracking servo. And, in an ID region 4 at a portion of the recording surface 2, there are made in advance pits 5 as shown in FIG. 3 in stead of the grooves 3. The pits 5 give access thereto even when there is no data information recorded therein and are provided with information such as an address for controlling the number of revolutions. Such information recorded in the form of pits in the optical record/reproduction apparatus in advance and are unable to be rewritten will hereinafter be called ID information.

In the prior art magneto-optical disk apparatus, record/reproduction of data information has been made by throwing a main beam 6 on the groove 3 of such a magneto-optical disk 1 as shown in FIG. 4. And from the ID region 4, the ID information represented by the pits 5 has been reproduced by detecting changes in the quantity of reflected light of the main beam 6. Also, sub-beams 7, 7 have been thrown on the magneto-optical disk 1 at positions offset in the radial directions inwardly and outwardly of the main beam 6, whereby an error signal for a tracking servo has been obtained from the difference in the quantity of light of the reflected beams therefrom.

However, when it was attempted to record data information also in the ID region 4 for increasing recording capacity or obtaining a simplified system, the prior art optical record/reproduction apparatus encountered such a problem that, while the ID information was easy to reproduce, the data information was difficult to reproduce.

Since the ID information is detected by changes in the quantity of light of the reflected beam caused by the pits 5, its reproduction is easy whether there is data information or not. However, since the data information is reproduced by detecting changes in the rotation of angle of plane of polarization of the reflected beam depending on the states of magnetization in the vertically magnetized film, the level of the reproduced signal is very low as compared with that of the ID information. Therefore, although it is theoretically possible to separate the data information from the ID information, it, in reality, is not always easy to detect the changes in the angle of rotation of the plane of polarization from the reflected beam whose quantity of light is greatly varied affected by the ID information. There has also been a factor, which further lowers the level of the reproduced signal of the data information, due to difference in level formed at the pits 5, because of which the main beam 6 is affected by diffraction or the like, or the magnetization at the time of recording of the vertically magnetized film is not satisfactorily performed. Thus, in the prior art optical record/reproduction apparatus, there has been unsolved the problem that reproduction of the data information from the ID region 4 is difficult.

SUMMARY OF THE INVENTION

Accordingly, an object of the present invention is to provide an optical record/reproduction apparatus, wherein it is made possible to record information invariably on a flat surface.

Another object of the present invention is to provide an optical record/reproduction apparatus, wherein it is made possible to record data information in an ID region.

Briefly described, in accordance with the present invention, the optical record/reproduction apparatus to solve the above mentioned problem uses a recording medium provided with data tracks and ID tracks alternately arranged thereon adjacent to each other, the ID tracks each being provided in advance with pits representing ID information recorded therein along its partial or entire length and the ID track being provided with a ditch type groove at its remaining portion where there are provided no such pits and comprises an optical head throwing a main beam and sub-beams positioned on both sides thereof on a recording medium, a tracking control means controlling the main beam to irradiate a data track from right above the same by means of a tracking servo using the sub-beams, a record/reproduction means for recording/reproducing data information along the data track using the main beam, and an ID information detection means for detecting the ID information recorded in pits along the ID track using the sub-beam.

BRIEF DESCRIPTION OF THE DRAWINGS

The present invention will become more fully understood from the detailed description given hereinbelow and the accompanying drawings which are given by way of illustration only, and thus are not limitative of the present invention and wherein:

FIG. 1 shows an embodiment of the present invention and is a partially enlarged plan view of a recording surface of a magneto-optical disk;

FIG. 2 is a plan view of the magneto-optical disk;

FIG. 3 is an enlarged perspective view taken along the line A of FIG. 2;

FIG. 4 shows a prior art and is a partially enlarged plan view of a recording surface of a magneto-optical disk; and

FIG. 5 is a schematic diagram of a magneto-optical disk apparatus for utilization in the present invention.

DESCRIPTION OF THE PREFERRED EMBODIMENT

An embodiment of the present invention will be described below with reference to FIGS. 1 to 3.

In the present case, an embodiment of a magneto-optical disk apparatus will be described. A magneto-optical disk 1 as the recording medium is as shown in FIGS. 2 and 3. That is, on the surface within a recording surface 2 where a vertically magnetized film is formed, there are made in advance a number of ditch type grooves 3 arranged in concentric circles, and in an ID region 4 at a portion of the recording surface 2, there are made pits 5 instead of the grooves 3. The pits 5 are those with ID information recorded therein. However, data tracks 8 for storing data information along the same are each provided with a land portion 9 which is formed between the grooves 3, 3 or pits 5, 5 provided along its adjoining tracks, whereby the same is separated from ID tracks 10 where the grooves 3 and the pits 5 are made.

An optical head throws a main beam 6 on the data track 8 made in the recording surface 2 of the magneto-optical disk 1 as shown in FIG. 1. The optical head also throws sub-beams 7, 7 on the positions offset by the same distances from the main beam 6 in the radial directions of the magneto-optical disk 1. Since the offset distance of the sub-beams 7, 7 from the main beam 6 is below the pitch distance between the adjoining data track 8 and ID track 10, the sub-beams 7, 7 are offset also in the directions along the track so that they may not interfere with each other.

A tracking servo in the present magneto-optical disk apparatus compares the quantities of light of reflected beams of the sub-beams 7, 7 for a difference therebetween and minutely adjust the tracking position of the optical head so that the difference between the quantities of light may become zero. That is, the sub-beams 7, 7 each irradiate the position between the land portion 9 and groove 3, or the pit 5, and therefore, supposing, for example, one of the sub-beams 7, 7 comes closer to the side of the land portion 9, it follows that the quantity of light of the reflected beam thereof increases, while that of the other decreases. Therefore, by controlling so that the difference between the quantities of light may become zero, it is achieved to keep the data track 8 to be always irradiated from right above by the main beam 6.

Recording of the data information along the data track 8 is performed, with the magneto-optical disk 1 applied with a magnetic field from its back side, by changing the quantity of light of the main beam 6 so that magnetization at the irradiated portion may thereby be changed. Reproduction of the data information recorded in the just described manner is performed by detecting the angle of rotation of the plane of polarization of the reflected beam of the main beam 6. At this time, since the data track 8 is always provided with a flat surface of the land portion 9, there is caused no such trouble as that the irradiated portion is not sufficiently magnetized or the detection of the angle of rotation of the plane of polarization becomes difficult due to great changes in the quantity of light of the reflected beam.

Reproduction of the ID information from the ID track 10 is performed by using one of the sub-beams 7, 7 and detecting the changes in the quantity of light of the reflected beam caused by the pits 5. Since the changes in the quantity of light of the reflected beam of the sub-beam 7 caused by the pits 5 become those of extremely short period and large variation in magnitude, it is easy to separate them from the changes in the quantity of light for the tracking servo. Therefore, it becomes possible to expand the ID region 4 or even to replace the whole of the groove 3 with the pits 5.

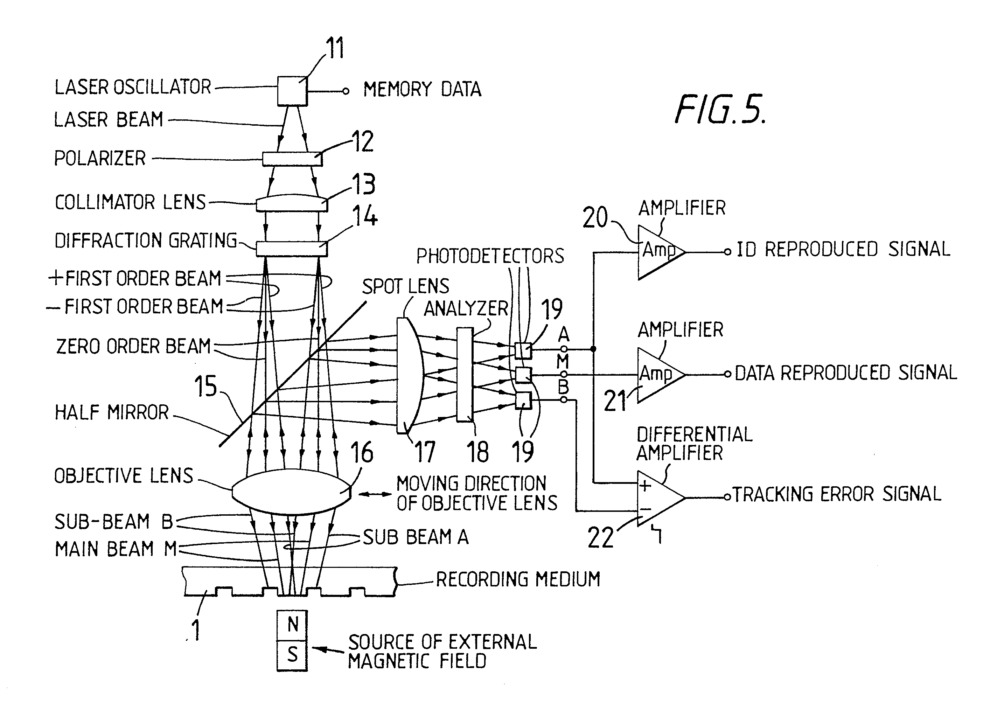

Accordingly, the magneto-optical disk apparatus of the present embodiment can record and reproduce data information along all the length around the circular data track 8 without causing any trouble. Also, the data tracks 8 can be formed at the same pitch distance as heretofore. Further, since pits 5 can be formed along the ID track 10 at will, various additional pieces of ID information can be recorded therein. FIG. 5 shows a magneto-optical disk apparatus for utilization in the present invention.

Operation of the present magneto-optical disk apparatus will be described below with reference to FIG. 5.

Optical head:

A laser beam emitted from a laser oscillator 11 is made uniform for plane of polarization by means of a polarizer 12 and turned into a parallel ray by means of a collimator lens 13. The beam is split into three beams, zero order beam, + first order beam, and - first order beam by means of a diffraction grating 14, and these three beams are irradiated on a medium 1 through an objective lens 16 as a main beam M, a sub-beam A, and a sub-beam B, respectively.

Reflected three beams are led by way of a half mirror 15, spot lens 17, and an analyzer 18 to their respective photodetectors 19 and therein converted into electrical signals.

Tracking control means:

The reflected beams of the sub-beams A and B are converted by photodetectors 19 into electrical signals A and B and these signals A and B are input to a differential amplifier 22, whereby a tracking error signal is obtained. The objective lens 16 is moved by means of an actuator in the directions indicated by the arrowheads so that the tracking error signal may become zero.

Record/reproduction means:

In recording data, the laser beam is given pulsation corresponding to the data to be recorded. The portion of the medium irradiated by a strong laser beam is heated up to temperature above Curie point, whereby the direction of magnetization in the medium (which was previously aligned in the direction opposite to the external magnetic field to be applied) is inverted into the direction of the then applied external magnetic field enabling the data to be recorded.

In reproducing data, the rotation of the plane of polarization produced in the main beam M reflected from the medium corresponding to the direction of magnetization in the medium is utilized. The rotation of the plane of polarization therein is converted into difference in intensity of light by means of the analyzer 18, converted then into an electrical signal M by means of the photodetector 19, and finally output, amplified by an amplifier 21, as the reproduced signal.

ID information detection means:

The reflected beam of the sub-beam A is converted by the photodetector 19 into the electrical signal A. Since the ID information is formed of uneven spots the signal A is directly obtained as difference in intensity of light. Therefore, the electrical signal A is amplified by an amplifier 20 and the ID information is thereby detected. (Since this signal has larger amplitude than the magneto-optical signal, it can be separated easily).

The optical record/reproduction apparatus in accordance with the present invention, as described in the foregoing, uses a recording medium provided with data tracks and ID tracks alternately arranged thereon adjacent to each other, the ID tracks each being provided in advance with uneven pits representing ID information recorded therein along its partial or entire length and the ID track being provided with a ditch type groove at its remaining portion where there are provided no such pits and comprises an optical head throwing a main beam and sub-beams positioned on both sides thereof on a recording medium, a tracking control means controlling the main beam to irradiate a data track from right above the same by means of a tracking servo using the sub-beams, a record/reproduction means for recording/reproducing data information along the data track using the main beam, and an ID information detection means for detecting the ID information recorded in pits along the ID track using the sub-beam.

With the aforesaid arrangement, it is made possible to record data information on a flat surface at all times, and therefore, such trouble can be eliminated as that the main beam is affected by diffraction leading to imperfect recording and that the quantity of light of the reflected beam suffers a great variation. Hence, even if recording capacity is increased by recording data information also in the ID region, the data information at that portion can be reproduced as heretofore. Further, even if the ID region is expanded, it does not affect the recording capacity, and so, it becomes possible to increase the ID information at will by expanding the region in which the pits are made instead of the groove.

In the prior art recording medium, the data track and the ID track were not separated. Therefore, pits were made in a portion of each track which was used as the ID region and the remaining larger portion was used as the region wherein a groove is provided. According to the present invention, there is no need of recording data information along the ID track, and therefore pits can be made along all the length of the ID track. Since the data track is that which is provided with the land portion present between grooves or pits along its adjoining tracks, this track is what was not used in the prior art. The optical head can be of the same arrangement as heretofore. The tracking servo can also be carried out in the same way as before, but, in this case, control is made by the tracking control means such that the main beam will irradiate the data track right from above at all times, and the data information, in this case, is recorded along the data track, that is, the land portion between grooves or pits along its adjoining tracks. Therefore, the data information can be recorded on a flat surface of the land portion unaffected by difference in level produced by the pits, and the data can be reproduced unaffected by a greatly varying quantity of light in the reflected beam. However, since the main beam does not irradiate the pits, the ID information is detected by the ID information detection means from the changes of the quantity of light in the reflected beam of one of the sub-beams. Which of the sub-beams should be used therefor is naturally determined by the arrangement as to which side of the ID tracks is to represent the ID information corresponding to the recording track then irradiated by the main beam. Further, since the recording methods of the data information along the data track and the ID information along the ID track are different from each other, there is no risk of mutual interference between the adjoining tracks, and therefore, the track design can be made to have the same density as before.

While only certain embodiments of the present invention have been described, it will be apparent to those skilled in the art that various changes and modifications may be made therein without departing from the spirit and scope of the present invention as claimed.

There are described above novel features which the skilled man will appreciate give rise to advantages. These are each independent aspects of the invention to be covered by the present application, irrespective of whether or not they are included within the scope of the following claims.

**Claims**

1. An optical record/reproduction apparatus comprising:
   an optical head throwing a main beam and sub-beams positioned on both sides thereof on a recording medium;

tracking control means controlling the main beam to irradiate a data track from right above the same by means of a tracking servo using the sub-beams;

record/reproduction means for recording/reproducing data information along the data track using the main beam; and

ID information detection means for detecting ID information recorded in pits along the ID track using the sub-beam.

2. The apparatus according to claim 1, wherein said recording medium is provided with data tracks and ID tracks alternately arranged thereon adjacent to each other, said ID tracks each being provided in advance with pits representing ID information recorded therein along its partial or entire length and said ID track being provided with a ditch type groove at its remaining portion where there are provided no such pits.

3. An optical record/reproduction apparatus comprising:

a recording medium having an identification portion adjacent to an information track;

tracking means for tracking said recording medium with a three-beam method using a main beam and two sub-beams; and

reproduction means for reproducing said identification portion with a sub-beam.

4. An apparatus for according data information on and/or reproducing information from an optical memory medium (1) having a surface preformed with a succession of ID data track portions (10) each comprising pits (5) and/or a groove (3) in said surface, characterised in that the data information is recorded on or reproduced from data information track portions (8) of the medium provided where said surface is flat between said ID data track portions.

0294241

## FIG.1.

## FIG.2.

FIG.3.

0294241

FIG.4.

FIG.5.

LASER OSCILLATOR — 11 — o MEMORY DATA

LASER BEAM —

POLARIZER — 12

COLLIMATOR LENS — 13

DIFFRACTION GRATING — 14

+FIRST ORDER BEAM

−FIRST ORDER BEAM

ZERO ORDER BEAM

15

HALF MIRROR

16

OBJECTIVE LENS

SUB-BEAM B

MAIN BEAM M — SUB BEAM A

MOVING DIRECTION OF OBJECTIVE LENS

SPOT LENS

ANALYZER

PHOTODETECTORS 19

17  18  19

AMPLIFIER

20 — Amp — o ID REPRODUCED SIGNAL

AMPLIFIER

Amp — o DATA REPRODUCED SIGNAL

21

A
M
B

DIFFERENTIAL AMPLIFIER

+
−

o TRACKING ERROR SIGNAL

22

RECORDING MEDIUM

1

N
S

SOURCE OF EXTERNAL MAGNETIC FIELD

0294241